# EUROPÄISCHE PATENTSCHRIFT

(11) **EP 3 472 461 B1**
(45) Veröffentlichungstag und Bekanntmachung des Hinweises auf die Patenterteilung: **29.07.2020**
(21) Anmeldenummer: 17739188.5
(22) Anmeldetag: 14.06.2017
(51) Int. Cl.: F03D 80/50

(54) **ROTORBLATTBEFAHRANLAGE**
ROTOR BLADE INSPECTION DEVICE
INSTALLATION D'INSPECTION D'UNE PALE DE ROTOR

(30) Priorität: 17.06.2016 DE 102016111129; 08.11.2016 DE 102016121273
(43) Veröffentlichungstag der Anmeldung: 24.04.2019
(73) Patentinhaber: WP Systems GmbH, 01945 Ruhland (DE)
(72) Erfinder: MÜLLER, Holger, 01855 Sebnitz (DE); BOESNER, Jan, 01099 Dresden (DE); HÖFNER, Robert, 01127 Dresden (DE); RENNER, Ole, 01099 Dresden (DE); ZAVESKY, Michael, 01069 Dresden (DE)
(74) Vertreter: Sperling, Thomas
(86) Internationale Anmeldenummer: PCT/DE2017/100499
(87) Internationale Veröffentlichungsnummer: WO 2017/215711

(56) Entgegenhaltungen:
- CN-A- 102 583 198
- DE-A1- 10 118 906
- DE-C2- 19 909 698
- ES-U- 1 072 052
- US-A1- 2012 003 089

## Beschreibung

Die Erfindung betrifft eine Rotorblattbefahranlage, welche insbesondere für die Inspektion, die Wartung und die Reparatur von Rotorblättern an Windenergieanlagen zum Einsatz kommt.

Im Stand der Technik sind eine Vielzahl von Ausgestaltungen von Rotorblattbefahranlagen in Form von Arbeitsbühnen, Hebebühnen oder Vorrichtungen für die Reparatur und Serviceleistungen an Rotorblättern von Windkraftanlagen bekannt.

Beispielsweise geht aus der DE 10 2010 060 639 A1 eine Arbeitsbühnenanlage für die vollumfängliche Befahrung von Rotorblättern von Windkraftanlagen hervor. Die Arbeitsbühne weist eine Trageinrichtung auf, welche an einem Kranseil eines Lastkranes vertikal entlang des Rotorblattes bewegt wird. Die Arbeitsbühne ist am Mast der Windkraftanlage abgestützt und in Leichtbau ausgeführt und dahingehend optimiert, dass auch bei ungleichmäßiger Belastung eine annähernd waagerechte Position der Arbeitsbühne realisiert ist.

Aus der DE 103 18 675 B4 geht eine Hebebühne für Befahranlagen zur Wartung der Rotorblätter von Windkraftanlagen hervor, welche mehrere Bühnenelemente aufweist, die um eine Öffnung für das Rotorblatt herum angeordnet sind. Durch die Bewegung wenigstens eines Bühnenelementes relativ zu den anderen Bühnenelementen ist die Hebebühne an die Abmessungen des Rotorblattes anpassbar. Die Bühnenelemente sind parallel zueinander verschieblich an Querträgern geführt und mit einer stufenlosen Abstandsverstellung ausgestattet.

In der DE 20 2007 002 930 U1 wird eine Hebebühne für Windkraftanlagen offenbart, wobei zwei Bühnenelemente mittels eines Schwenkgelenks miteinander verbunden sind. Über das Verschwenken der beweglichen Bühnenelemente wird in gewissen Grenzen eine Anpassung an die Geometrie der Rotorblattkontur vorgenommen.

Ein Verfahren und eine Vorrichtung für die Beschichtung von Rotorblättern von Windkraftanlagen ist in der DE 101 18 906 A1 offenbart. Eine Kammer ist über eine Hubbühne heb- und senkbar ausgebildet. In der Position zur Rotorblattbearbeitung wird die Kammer durch ein Rotorblatt durchquert, wobei die Kammer das Rotorblatt in horizontaler Richtung umschließt. Zur Anpassung an die Geometrie des Rotorblattes ist die Kammer in ihrem Volumen veränderbar ausgebildet.

In der ES 1 072 052 U ist eine Hubbühne zur Untersuchung von Windkraftanlagen offenbart. Eine Kammer ist dabei an Aufhängungsmitteln hängend angeordnet und kann auf einem dafür vorgesehenen Anhänger an den Arbeitsort befördert werden.

Eine Vorrichtung zur Instandhaltung von Rotorblättern von Windkraftanlagen ist in der US 2012/0003089 A1 beschrieben. Die Vorrichtung weist ein ringförmiges erstes Element auf, welches um den Turm anordenbar und entlang des Turmes in der Position variierbar ausgebildet ist. Dieses ist über einen Teleskoparm mit einem zweiten Element verbunden. Das zweite Element ist das Rotorblatt umschließend und an die Form des Rotorblattes anpassbar ausgebildet. Dafür ist das zweite Element insbesondere in horizontaler Ebene schwenkbar gegenüber dem ersten Element.

In der CN 102583198 A ist eine Wartungsplattform für Windturbinenblätter offenbart. Die Wartungsplattform umfasst eine Plattform und eine Vielzahl von Hubmaschinen, welche die Plattform nach oben befördern. Die Plattform umgibt das Windturbinenblatt während der Wartung. Ferner weist die Plattform wenigstens eine Teleskop-Plattform auf, welche über einen Teleskopmechanismus von der Plattform weg oder an diese heran bewegbar ist.

Die DE 199 09 698 C2 offenbart eine Vorrichtung zur Durchführung von Reparatur- und Serviceleistungen insbesondere an Rotorblättern von Windkraftanlagen. Diese Vorrichtung ist dadurch gekennzeichnet, dass eine Arbeitskabine mit Dichteinrichtungen vorgesehen ist, welche ein Abdichten der Arbeitskabine gegenüber den am Standort herrschenden Umgebungsbedingungen ermöglicht. Die Rotorblätter aus faserverstärktem Kunststoff oder Aluminium werden dabei teilweise von der Arbeitskabine aufgenommen und zur Durchführung von Reparatur- und Serviceleistungen kann der Innenraum nach außen über eine Vielzahl als Stößel ausgebildete Dichteinrichtungen abgedichtet werden.

Den bekannten Ausgestaltungen von Rotorblattbefahranlagen nach dem Stand der Technik haften weiterhin einige gravierende Nachteile an.
Ganz allgemein führen große Abstände zwischen den begehbaren Plattformen der Befahranlagen und der Rotorblattoberfläche zu ungünstiger Zugänglichkeit für das Servicepersonal beim Inspizieren, Warten und Reparieren der Rotorblätter.
Außerdem ist infolge der Dimension der Abstände beziehungsweise Spalte die Möglichkeit reduziert, selbst eine als Wartungskammer ausgebildete Befahranlage gegenüber der Umgebung thermisch oder bezüglich Wettereinflüssen, wie Wind, Regen und Schnee, abzudichten. Dies führt dazu, dass die Befahranlagen nach dem Stand der Technik nur eingeschränkt bei bestimmten Wetterbedingungen zum Einsatz kommen können.
Weiterhin besteht das Problem, dass die Querschnittsabmessungen von Rotorblättern von Windenergieanlagen von der Rotorblattspitze bis zur Rotorblattwurzel stark variieren. Eine konstruktive Anpassung der Befahranlagen an diese Geometrien bereitet Probleme, da die Befahranlagen dann an bestimmte Rotorblatttypen gebunden und nicht universell für eine Vielzahl von Geometrien einsetzbar sind.
Weiterhin weisen die Rotorblätter selbst einen sogenannten Twist auf, worunter eine Verdrehung des Querschnitts über die Länge des Rotorblattes von bis zu 20 Grad zu verstehen ist.
Somit sind übliche Rotorblattbefahranlagen in der Regel als offene Systeme ausgestaltet, was jedoch zu den genannten größeren Spaltabmessungen zwischen Befahranlage und Rotorblatt führt.

In der Regel bestehen herkömmliche Rotorblattbefahranlagen aus einer Tragstruktur aus Aluminium oder Stahl mit integriertem Abdruckrahmen zur Abstützung der Plattformen am Turm. Auf einem Tragrahmen sind begehbare, das Rotorblatt umschließende, offene Plattformen aus Aluminium oder Stahl montiert. Die sich zwischen den Plattformen ergebende Öffnung ist in der Regel nicht oder nur partiell an die Querschnittsform der Rotorblätter angepasst, woraus zwangsläufig größere Spalte zwischen Rotorblatt und Plattform resultieren. Weiterhin werden die Befahranlagen über zwei Trag- und zwei Sicherungsseile aus Stahl an der Gondel der Windenergieanlage befestigt, wobei im Normalbetrieb nur die Tragseile in Eingriff sind. An den Außenseiten der Plattformen der Befahranlagen sind in der Regel Seildurchlaufwinden befestigt, mit denen die Plattformen in vertikaler Richtung bewegt werden. Der im Tragrahmen integrierte Abdruckrahmen ist relativ zur Befahranlage in horizontaler Richtung verschiebbar, so dass der Abstand zwischen Befahranlage und Turm reguliert werden kann. Üblicherweise sind auch Vorrichtungen zur Neigungsverstellung vorgesehen, um sich ergebende unterschiedliche Neigungen der Plattformen ausgleichen zu können.

Üblich ist weiterhin, dass die offenen Plattformen in Richtung des Rotorblattes und in Richtung der Außenseiten mit Geländern versehen sind. Auch ist es bekannt, die Plattform durch Klappen oder Verschieben einzelner Module auf die für den Straßentransport zulässige Breite zu reduzieren.

Ein besonderer Nachteil des Standes der Technik besteht darin, dass für unterschiedliche Rotorblattgrößen spezielle, an diese Größen angepasste Befahranlagen verwendet werden müssen, um die Spalte zwischen der Plattform und der Rotorblattoberfläche zu minimieren. Im Ergebnis müssen für verschiedene Rotorblattquerschnitte unterschiedliche Rotorblattbefahranlagen eingesetzt werden.

Insgesamt ist festzustellen, dass die relativ großen und die Wartungsarbeiten behindernden Spalte mit der bekannten Technik nur eingeschränkt reduziert werden können und überwiegend in Kauf genommen werden müssen. Ein weiteres Problem von Befahranlagen nach dem Stand der Technik besteht darin, dass die Befahranlagen auf Grund starker Schrägstellung der Tragseile häufig nicht bis zum Bereich der Rotorblattwurzel vordringen können. Als Ursache ist die in Folge der Schrägstellung der Seile auftretende Überlastung der Seilwinden zu nennen, was bei Überschreitung eines bestimmten Überlastniveaus zu einem automatischen Abschalten der Seilwinden führt.

Die bekannten Probleme werden von Ausgestaltungen nach dem Stand der Technik nur ansatzweise gelöst.

Die Aufgabe der Erfindung besteht somit darin, eine Rotorblattbefahranlage derart auszubilden, dass diese variabel an unterschiedliche Geometrien und Abmessungen von Rotorblättern anpassbar ist. Weiterhin soll ein geringer Umrüstaufwand der Befahranlage an verschiedene Rotorblattflügel und eine gute Transportierbarkeit der Befahranlage zwischen unterschiedlichen Einsatzorten erreicht werden bei möglichst hoher Arbeitssicherheit und hohem Komfort bei optimalen Arbeitsbedingungen für die Nutzer der Befahranlage.

Die Aufgabe wird durch einen Gegenstand mit den Merkmalen gemäß Patentanspruch 1 gelöst. Weiterbildungen sind in den abhängigen Patentansprüchen angegeben.

Die Aufgabe der Erfindung wird insbesondere durch eine Rotorblattbefahranlage gelöst, welche im Wesentlichen aus einer von einem Rotorblatt vertikal durchdringbaren Wartungskammer besteht, welche an einem Tragrahmen angeordnet ist. Der Tragrahmen ist über einen Abdruckrahmen an einem Turm einer Windkraftanlage abstützbar. Im Kammerboden und in der Kammerdecke der Wartungskammer ist jeweils eine vom Rotorblatt durchdringbare Boden- und Deckenöffnung angeordnet, wobei der Kammerboden und die Kammerdecke jeweils als Blendensystem zur Minimierung eines Spaltes zwischen der Boden- und Deckenöffnung und dem Rotorblatt ausgebildet sind.

Vorteilhaft ist der Abdruckrahmen in den Tragrahmen zum Abstützen der Rotorblattbefahranlage am Mast integriert ausgeführt.
Der Abdruckrahmen ist dabei vorteilhaft in horizontaler Richtung verschiebbar gegenüber dem Tragrahmen ausgebildet, so dass der Abstand der Rotorblattbefahranlage zum Turm der Windkraftanlage über die Stellung des Abdruckrahmens einstellbar ist. Besonders vorteilhaft ist die teleskopartige Führung des Abdruckrahmens in Relation zum Tragrahmen.

Bevorzugt ist die Wartungskammer hängend am Tragrahmen angeordnet.

Die Wartungskammer ist in der horizontalen Ebene drehbar gegenüber dem Tragrahmen gelagert. Auf diese Weise kann die Wartungskammer dem Twist des Rotorblattes folgen, ohne das Blendensystem anpassen zu müssen. Dabei liegt die Drehachse für die Wartungskammer in der Achse des Twistes des Rotorblattes.
Die Wartungskammer ist dazu besonders bevorzugt durch Rollen oder andere Führungselemente am Tragrahmen drehbar gelagert.
Vorteilhaft ist die Wartungskammer dabei um die Drehachse des Rotorblattes drehbar ausgeführt.

Bevorzugt ist die Wartungskammer aus einem Strukturrahmen und Verkleidungselementen für die Seitenflächen der Wartungskammer zur Bildung eines nach außen weitgehend abgeschlossenen Arbeitsraumes ausgebildet. Die Seitenflächen der Wartungskammer und/oder die Seitenflächen der Balkone sind somit bevorzugt verschließbar ausgebildet, insbesondere um eine Beheizung der Wartungskammer und einen Witterungsschutz zu realisieren sind die Seitenflächen durch geeignete Leichtbaustoffe oder Planen verschließbar ausgeführt.
In einer besonders bevorzugten Variante besteht die Kammer aus einem Tragwerk mit schlanken Stahl-, Aluminium- oder Kunststoffstreben, deren Zwischenräume mit Kunststoffplanen verschlossen werden können.
Die Wartungskammer ist alternativ als leichte Zelle aus faserverstärktem Kunststoff oder Aluminium ausgebildet.

Bevorzugt ist das Volumen der Wartungskammer durch mindestens ein teleskopartig bewegbares Seitenelement vergrößerbar ausgebildet. Das Seitenelement ist in der Art eines Balkons ausgestaltet, welcher aus der Wartungskammer herausziehbar oder ausfahrbar ist. Die seitlichen Begrenzungswände der Seitenelemente sind dabei auch bevorzugt verschließbar ausgeführt, um das erweiterte Wartungskammervolumen gegenüber der Umwelt, insbesondere bei widrigen Witterungsbedingungen, abzugrenzen. Die Seitenelemente beziehungsweise die Balkone vergrößern somit teleskopartig den Kammerboden und die Kammerdecke, wodurch sich die Arbeitsbedingungen für die Servicetechniker verbessern.

Besonders bevorzugt sind zwei Seitenelemente vorgesehen, die relativ zur Wartungskammer und orthogonal zu den Rotorblattseiten verschiebbar ausgebildet sind. Auch ist vorteilhaft und zweckmäßig, die teleskopierbaren Seitenelemente gegenüber der Wartungskammer arretierbar auszugestalten.

Bevorzugt ist das Blendensystem zur Verringerung des Spaltes zwischen der begehbaren Plattform und dem Rotorblatt aus einem festen Deckenelement oder einem festen Bodenelement und aus ein-, zwei- oder mehreren verfahrbaren Blendenelementen ausgeführt. Selbstverständlich ist das Blendensystem in der Ausgestaltung der Wartungskammer mit einer Kammerdecke sowie einem Kammerboden bevorzugt aber nicht notwendigerweise in beiden Plattformen ausgeführt. Die verfahrbaren Blendenelemente sind scheiben- oder plattenartige Elemente, die in einer Ebene geführt bewegbar ausgebildet sind. Bei Ausführungsformen mit mehreren Blendenelementen wirken diese in einem Blendensystem zur Erreichung des Verschlusses oder Öffnung eines Flächenbereiches zusammen. Bevorzugt sind die Blendenelemente einzeln und im Verbund des Blendensystems statisch derart beschaffen, dass diese begehbar sind. Die Blendenelemente sind somit bevorzugt als starre Scheiben oder Platten ausgeführt, die einzeln oder gemeinsam zueinander verschiebbar sind.

Die Blendenelemente sind vorteilhaft translatorisch oder verschwenkbar oder rotatorisch bewegbar ausgebildet. Ebenso sind mehrere Bewegungsarten sich überlagernd ausführbar.

Nach einer vorteilhaften Weiterbildung der Erfindung ist das Blendensystem als Ringblende ausgebildet.

Nach einer besonders bevorzugten Ausgestaltung ist das Blendensystem in der horizontalen Ebene drehbar ausgebildet. Diese Ausführung erlaubt die Nachführung des Twistes des Rotorblattes ohne die Wartungskammer selbst bewegen zu müssen.
Eine weitere vorteilhafte Ausgestaltung besteht darin, dass die Stellung der Blendenelemente in Abhängigkeit des Verfahrweges der Wartungskammer und des Twists des Rotorblattes angepasst wird.

Die verfahrbaren Blendenelemente des Blendensystems sind bevorzugt an der dem Rotorblatt zugewandten und mit diesem gegebenenfalls in Kontakt kommenden Seite konkav und korrespondierend zur Rotorblattaußenkontur ausgestaltet. Dies reduziert insbesondere bei Ausgestaltungen von Blendensystemen mit nur wenigen Blendenelementen die Spaltgröße bereits signifikant.

Nach einer besonders vorteilhaften Ausgestaltung weisen die Blendenelemente des Blendensystems zur Rotorblattaußenkontur hin eine Dichtung auf, welche dann in direkten Kontakt mit dem Rotorblatt kommen kann, ohne dieses zu beschädigen.
Als Dichtungen werden bevorzugt Bürstendichtungen oder aufblasbare Dichtelemente eingesetzt.

Zur Anpassung an große Rotorblattkonturen ist der Tragrahmen seitlich vergrößerbar, insbesondere auch teleskopierbar ausgebildet.

Zum Antrieb der Rotorblattbefahranlage in vertikaler Richtung sind bevorzugt Seildurchlaufwinden oder auch andere Winden vorgesehen. Besonders vorteilhaft ist es, die Seildurchlaufwinden horizontal verschiebbar zu lagern, wodurch ein Neigungsausgleichssystem für die Rotorblattbefahranlage geschaffen wird und die Neigung der Wartungskammer somit justierbar ist.

Um das Dach der Wartungskammer als zusätzliche Arbeitsplattform nutzen zu können, ist dieses als festes Deckenelement ausgeführt und weist vorteilhaft einen Dachzugang auf.

Der Tragrahmen ist formschlüssig mit der Wartungskammer verbunden.
Die Zustellwalze ist mit der Wartungskammer verbunden und dieser gegenüber horizontal verschiebbar gelagert. Sie ermöglicht eine horizontale Abstützung der Wartungskammer an der Rotorblattvorderkante. Diese Abstützung wirkt zusätzlich zur Abstützung des Abdruckrahmens am Turm, kann jedoch auch als alleinige Abstützung verwendet werden. Bei alleiniger Abstützung durch die Zustellwalze wird insbesondere bei Befahrungen nahe der Blattwurzel eine Schrägstellung der Tragseile reduziert, was dazu führt, dass das Befahrsystem näher an die Blattwurzel vordringen kann. Darüber hinaus besteht bei alleiniger Abstützung der Wartungskammer am Rotorblatt die Möglichkeit, die Kammer samt dem Tragrahmen mit dem Blatttwist zu drehen. Auch dies kann dazu führen, dass das Wartungssystem weiter bis an die Rotorblattwurzel vordringen kann, als es mit heutigen Befahrsystemen möglich ist.

Wichtige Aspekte und Ausgestaltungen der Erfindung bestehen somit in den folgenden Punkten.
Zunächst besteht die Konzeption der Erfindung darin, eine Rotorblattbefahranlage als Wartungssystem mit geschlossener Wartungskammer zur Verfügung zu stellen, die aus einem Strukturrahmen aufgebaut und an einem Tragrahmen gelagert ist, wobei ein Abdruckrahmen zum Abstützen der gesamten Konstruktion an einem Turm einer Windkraftanlage in der Horizontalen relativ bewegbar zum Tragrahmen ausgebildet ist.
Zur bestmöglichen Anpassung von Boden- und Dachstruktur der Wartungskammer an den Rotorblattquerschnitt für einen minimalen Abstand zum Rotorblatt wird ein ein-, zwei- oder mehrteiliges, translatorisch verfahrbares Blendensystem mit an den Querschnitt des Rotorblatts angepasster Kontur bereitgestellt.
Die Blende selbst oder die ganze Kammer ist um die Vertikalachse drehbar ausgeführt, um eine Anpassung an den Twist des Rotorblattes auf dem vertikalen Verfahrweg der Wartungskammer zu ermöglichen.
Gute Transport- und vielfältige Einsatzmöglichkeiten werden dadurch erreicht, dass eine feste Wartungszelle mit ausfahrbaren Seitenteilen vorgesehen ist, die nach erfolgtem Straßentransport entweder in der Maximalposition fixiert oder kontinuierlich, relativ zur Größe des Rotorblattes, verfahren und teleskopartig vergrößert werden kann.

Ein besonderer Vorteil besteht darin, dass die erfindungsgemäße Rotorblattbefahranlage durch die Ausbildung einer Wartungskammer mit einem begehbaren festen Bodenelement und einem Deckenelement zwei Ebenen zur Verfügung stellt, auf denen gearbeitet werden kann. Dies ist insbesondere bei Arbeiten in der Nähe der Blattwurzel vorteilhaft, da diese in vielen Fällen mit einer Hebebühne mit nur einer Plattform durch den Seilschrägzug nicht erreicht werden kann.

Auch ist besonders vorteilhaft zu erwähnen, dass die Kippneigung wesentlich reduziert ist. Dies wird ermöglicht durch den größeren vertikalen Abstand zwischen Aufhängung am oberen Tragrahmen und Kammerabstützung an der Rotorblattvorderkante mit Hilfe der Zustellwalze. Generell gilt: je größer der vertikale Abstand zwischen der Aufhängung der Tragseile und einem horizontalen Stützpunkt der Kammer ist, umso geringer ist die Schrägseilproblematik.

Ein weiterer Vorteil besteht darin, dass durch die Verwendung von Tragstrukturen zur Schaffung einer Kammer ein hoher Leichtbaugrad umsetzbar ist. Ein weiterer Vorteil besteht darin, dass durch die Anpassbarkeit der Rotorblattbefahranlage an die jeweilige Geometrie der Rotorblätter eine große Vielfalt an Windenergieanlagentypen und Rotorblattgeometrien abgedeckt werden kann.

Ein besonderer Vorteil besteht weiterhin darin, dass der Twist, die Verdrillung der Rotorblätter in vertikaler Richtung, durch die erfindungsgemäße Rotorblattbefahranlage berücksichtigt werden kann, in dem sich die gesamte Wartungskammer oder alternativ nur das Blendensystem der Wartungskammer mit dem Twist verdreht.

Auch kommt es zu einer erheblichen Verbesserung der Arbeitsbedingungen durch die Möglichkeit der Klimatisierung und Konditionierung der Wartungskammerraumbedingungen mit definiert einstellbaren Parametern, wie Temperatur, Feuchtigkeit und Staubgehalt.

Als besonders vorteilhaft ist hervorzuheben, dass die Spalten zwischen dem Rotorblatt und der Befahranlage minimiert werden und die Servicetechniker somit einfacher eine fachgerechte Reparatur an den Rotorblättern ausführen können. Weiterhin können optimale Temperaturen für die Ver- und Bearbeitung von Faserverbundwerkstoffen in der Wartungskammer eingestellt werden. Dies betrifft insbesondere eine optimale Luftfeuchtigkeit, eine optimale Temperatur, und es können auch in großer Höhe optimierte Werkstattbedingungen und eine fachgerechte Werkzeugausstattung in der Kammer zur Verfügung gestellt werden.

Zusammengefasst sind als Vorteile die Leichtbau-Tragstruktur, das Arbeiten auf zwei Ebenen und eine bessere Erreichbarkeit der Blattwurzel zu nennen. Weiterhin ermöglichen geringe Distanzen zwischen Rotorblatt und Befahranlage erstmals eine einfache statische Abdichtung. Es besteht ein geringes Absturzrisiko für Arbeiter und Arbeitsmittel und ein hoher Schutz des Arbeiters, da eine Redundanz der Sicherungsmittel mit Anschlagmittel und Geländer besteht.
Somit ist eine hohe Servicequalität erreichbar und es besteht eine minimierte Schädigungsgefahr des Rotorblattes, da die Abstützung gleichmäßig mit einer großen Fläche an dem Rotorblatt erfolgt und Windlasten während des Services gleichmäßig in das Blatt eingeleitet werden.

Die Abdichtung der Wartungskammer ermöglicht nun auch eine definierte Absaugung anfallender Schleifstäube und weiterer chemikalischer Abfälle.
Die qualitativ hochwertige Reparatur verlängert die Laufleistung von Windenergieanlagen und optimiert somit die Stromerzeugung mittels regenerativen Energien.
Der aufwändige Komplettaustausch von Rotorblättern mit Hilfe von energieintensiven Krantechniken wird minimiert.
Es kann eine wesentliche Verbesserung der Reparaturqualität durch das geschlossene System erreicht werden.
Die Größenadaptivität der Anlage ermöglicht einen Wartungsservice an annähernd allen Rotorblatttypen gängiger Windenergieanlagen mit nur einer Rotorblattbefahranlage.

Durch die Verdoppelung der Ebenen wird das zeitgleiche Arbeiten an mehreren Stellen sowie die Bearbeitung von Schadstellen mit großer Länge möglich.
Auch kann eine Reduzierung von Bearbeitungszeiten durch den Einsatz fachgerechter Werkzeuge erfolgen.
Die vereinfachte Inspektion führt zu besseren Möglichkeiten der Schadenserkennung mit technischen Hilfsmitteln.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Rotorblattbefahranlage perspektivische Darstellung,
- Fig. 2:: Rotorblattbefahranlage in der Seitenansicht,
- Fig. 3:: Rotorblattbefahranlage in der Vorderansicht,
- Fig. 4a:: Rotorblattbefahranlage in der Seitenansicht,
- Fig. 4b:: Rotorblattbefahranlage in der Draufsicht,
- Fig. 4c:: Rotorblattbefahranlage in der Draufsicht mit gedrehter Kammer,
- Fig. 5a:: Rotorblattbefahranlage mit Rotorblatt in der Seitenansicht mit Abstützung am Turm,
- Fig. 5b:: Rotorblattbefahranlage mit Rotorblatt in der Seitenansicht mit Abstützung am Rotorblatt,
- Fig. 6a, b:: Dichtungssystem mit Bürsten und aufblasbaren Dichtungen,
- Fig. 7a:: Blendensystem mit vollständig zugefahrenen Blenden und
- Fig. 7b:: Blendensystem mit geöffneten Blenden.

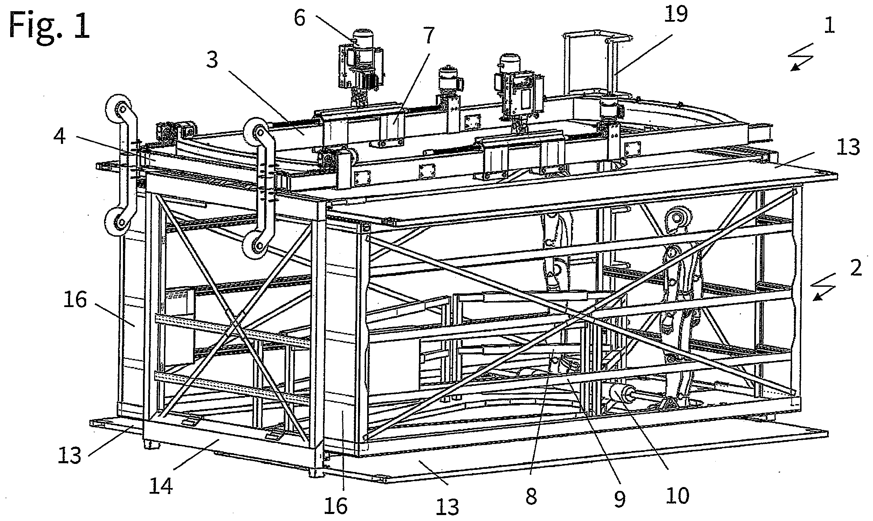

In den Figuren 1 bis 3 ist eine Rotorblattbefahranlage 1 in verschiedenen Ansichten gezeigt.
In Figur 1 ist die Rotorblattbefahranlage 1 perspektivisch dargestellt, welche im Wesentlichen aus einer Wartungskammer 2 besteht, die an einem Tragrahmen 3 hängend angeordnet ist. Der Tragrahmen 3 ist mit dem Abdruckrahmen 4 verbunden, welcher in diesem geführt wird. Der Abdruckrahmen 4 lehnt sich am hier nicht dargestellten Turm 5 der Windkraftanlage an.

Die dargestellte Rotorblattbefahranlage 1 besteht konstruktiv aus einem oberen Tragrahmen 3, der aus zwei parallel zu den Rotorblattseitenflächen verlaufenden Längsträgern sowie aus Stahl, Aluminium oder Faserverbundwerkstoff ausgebildet ist. Die Träger sind durch seitliche Verstrebungen jeweils strukturell miteinander verbunden. Am oberen Tragrahmen 3 sind Seildurchlaufwinden 6 oder andere Winden befestigt, die das Wartungssystem in vertikaler Richtung antreiben. Die Seildurchlaufwinden 6 sind am Tragrahmen 3 horizontal mittels des Neigungsausgleichssystems 7 verschiebbar gelagert, wodurch die Neigung des Wartungssystems justiert werden kann. In den Tragrahmen 3 ist der Abdruckrahmen 4 integriert, der das Wartungssystem gegenüber dem Turm 5 der Windkraftanlage abstützt. Der Abdruckrahmen 4 ist in horizontaler Richtung relativ zur Rotorblattbefahranlage 1 verschiebbar.
An dem oberen Tragrahmen 3 ist eine Wartungskammer 2 so gelagert, dass sie sich relativ zum Tragrahmen 3 verdrehen kann. Die Wartungskammer 2 besteht vorzugsweise aus einer geschlossenen Struktur, die den darin arbeitenden Technikern Schutz vor Regen, Wind und Kälte bietet.
Die Wartungskammer 2 stützt sich in horizontaler Richtung am oberen Tragrahmen 3 ab, so dass oberer Tragrahmen 3, Wartungskammer 2 und die am Kammerboden angeordnete Zustellwalze 10 eine auf Schub belastbare Gesamtstruktur ergeben.
In vertikaler Richtung stützt sich die Wartungskammer 2 am oberen Tragrahmen 3 ab. Die Gewichtskraft der Wartungskammer 2 wird somit auf den oberen Tragrahmen 3 übertragen.
In horizontaler Richtung ergeben sich folgende eindeutige Lastpfade. Bei Abstützung am Turm 5 durch den Abdruckrahmen 4 werden die Horizontallasten direkt in den oberen Tragrahmen 3 eingeleitet. Bei Abstützung an der Rotorblattvorderkante über die Zustellwalze 10 werden die Horizontallasten in Form einer Schublast durch die Wartungskammer 2 in den oberen Tragrahmen 3 übertragen, der in Horizontalrichtung formschlüssig mit der Oberseite der Wartungskammer 2 verbunden ist.

Die Gestaltung der Wartungskammer 2 erfolgt bevorzugt wie nachfolgend ausgeführt und dargestellt.

Die Wartungskammer 2 besteht vorzugsweise aus einer leichten Zelle aus einem Tragwerk aus hochfesten Stahlstreben, aus faserverstärkten Kunststoffen oder Aluminium, dem festen Strukturrahmen 14 . Die Zwischenräume des Tragwerks sind an der Stirnseite der Kammer durch dichtende Elemente, wie zum Beispiel durch leichte Kunststoffplanen, abgedichtet. Die abdichtenden Elemente sind vorzugsweise transparent ausgeführt.
Die Wartungskammer 2 besitzt bevorzugt einen rechteckigen Querschnitt, wobei die langen Seiten die Rotorblattseiten und die kurzen Seiten die Rotorblattkanten, die Rotorblattvorder- und -hinterkante, umschließen.
Die langen Seiten bestehen aus separaten Elementen, den Seitenelementen oder Balkonen, die relativ zur Kammerzelle orthogonal zu den Rotorblattseiten verschiebbar beziehungsweise ausziehbar sind. In ausgezogener Position können sie gegenüber der Wartungskammer 2 arretiert werden.
Auch die Balkone 16 bestehen vorzugsweise aus einer Leichtbau-Tragstruktur, zum Beispiel aus Faserverbund-oder Aluminium-Sandwichelementen.
Die Seitenflächen der Balkone 16 sind vorzugsweise offen und können manuell, etwa durch ein Rolltor, eine Jalousie oder durch eine Plane, abgedichtet werden. Die abdichtenden Elemente der Balkon-Seitenflächen sind vorzugsweise transparent ausgeführt.
Die Wartungskammer 2 ist vorzugsweise durch Rollen oder andere Führungselemente am oberen Tragrahmen 3 aufgehangen. Die Führung ist so gestaltet, dass sich die Wartungskammer 2 auf einer Kreisbahn um die Twistachse des Rotorblattes relativ zum Tragrahmen 3 bewegen kann.
Die Wartungskammer 2 ermöglicht prinzipbedingt sowohl eine Begehbarkeit des Kammerbodens als auch eine Begehbarkeit des Kammerdaches. Somit können Wartungsarbeiten auf beiden Ebenen durchgeführt werden. Die Begehbarkeit des Kammerbodens wird durch ein festes begehbares Bodenelement und die Begehbarkeit des Daches wird durch ein festes begehbares Deckenelement und den Dachzugang 19 erreicht. Die Begehbarkeit des Daches ermöglicht insbesondere im Bereich der Rotorblattwurzel einen besseren Zugang für Wartungsarbeiten, die mit herkömmlichen Anlagen häufig nicht abgedeckt werden können.
Die offenen Seiten der Wartungskammer 2 nach außen, sowohl Boden als auch Dach, werden durch ein Außengeländer 9 begrenzt. Die Bereiche in der Wartungskammer 2 zum Rotorblatt 11 hin werden durch ein Innengeländer 8 gesichert. Die oberen Geländer sind zur Reduzierung der Höhe des Gesamtsystems klapp-, teleskopierbar oder demontierbar am Kammerdach befestigt.

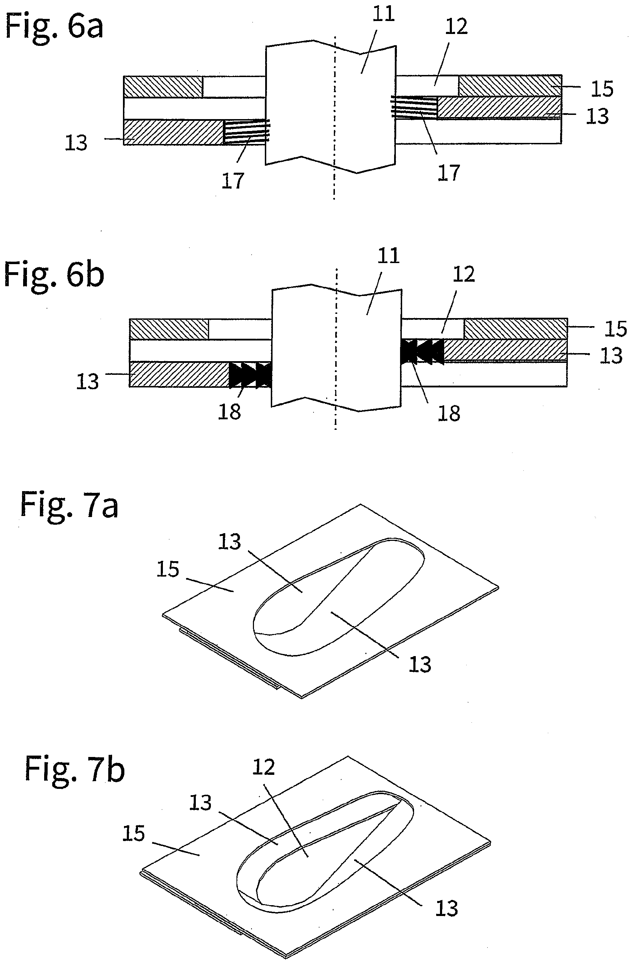

Das Blendensystem ist ein wesentliches Element der Rotorblattbefahranlage 1, um die Außenkontur beispielsweise eines Rotorblattes 11 zu erfassen und abzudichten. Das Blendensystem des Kammerbodens und der Kammerdecke, insbesondere gemäß den Figuren 6a,b und 7a,b, besteht aus einem begehbaren festen Boden- oder Deckenelement 15 und einer oder mehreren beweglichen, verfahrbaren und gegebenenfalls auch begehbaren Blendenelementen 13, die orthogonal zu den Rotorblattseiten bewegt werden können.
Der Kammerboden und die Kammerdecke besitzen mittig einen Ausschnitt, die Boden-, beziehungsweise Deckenöffnung 12, welche der Kontur der größtmöglichen Blattquerschnitte der zu wartenden Rotorblätter 11 entspricht.
Die Blendenelemente 13 sind auf in Vertikalrichtung verschobenen Ebenen parallel zueinander gelagert und können dadurch auch überlappend positioniert werden.
Die Blendenelemente 13 bilden im maximal zusammengefahrenen Zustand gemeinsam mit dem festen Bodenelement 15 oder dem festen Deckenelement 15 der fixierten Balkons 16 einen geschlossenen Boden, wobei sich dieser über mehrere Ebenen erstreckt. In diesem Zustand überlappen sich große Bereiche der Blendenelemente 13 und diese sind maximal in Richtung Kammermitte verfahren.
In maximal geöffnetem Zustand der verfahrbaren Blendenelemente 13 entsteht in der Kammermitte eine Öffnung, die Boden- und Deckenöffnung 12.
Die beweglichen Blendenelemente 13 sind in Richtung des Rotorblattes 11 so konturiert, dass sie für verschiedene Blatttypen und Querschnittsgrößen sehr nah an die jeweilige Rotorblattoberfläche herangefahren werden können und sich so umlaufend ein minimaler Spalt einstellt. Ein ideales Spaltmaß ergibt sich dabei durch die Rotation der Wartungskammer 2 in Kombination mit dem Verfahren der konturierten Blendenelemente 13.

In einer speziellen alternativen Ausführung des Wartungssystems ist die Wartungskammer 2 gegenüber dem Tragrahmen 3 fixiert. Die Rotation wird hier alternativ zu vorgeannter Variante über das Blendensystem selbst realisiert. Die Blendenelemente 13 führen somit sowohl eine rotatorische als auch eine translatorische Bewegung aus.
Das beschriebene Blendensystem ist auch für offene Rotorblattbefahranlagen vorgesehen, wobei die Funktion der Dichtung dann auf den Fallschutz reduziert ist.
Besonders bevorzugt sind die verfahrbaren Blendenelemente 13 des Blendensystems derart dimensioniert, gelagert und geführt, dass diese selbst begehbar ausgeführt sind, womit für bestimmte Arbeiten an den Rotorblättern eine Vereinfachung verbunden ist.

Sowohl auf der Boden- als auch der Dachebene der Wartungskammer 2 sind Möglichkeiten zum Anschlagen von Insassen vorgesehen. Unter dem Anschlagen von Insassen ist das Sichern von Personen oder Gegenständen zu verstehen, welche sich beispielsweise über ein Seil mit der Wartungskammer 2 verbinden.

Die Wartungskammer 2 ist mit einer Vorrichtung ausgestattet, die während des Wartungsbetriebs den sicheren Wechsel von Insassen von der Bodenebene auf die Dachebene und andersherum ermöglicht. Im dargestellten Ausführungsbeispiel ist dazu ein Dachzugang 19 vorgesehen, der als Leiter vom Inneren der Wartungskammer 2 aus für den Wechsel von der Bodenebene auf die Dachebene der Wartungskammer 2 genutzt werden kann.
In einer besonderen Ausführung des Wartungssystems zur Wartung von Rotorblättern 11 mit besonders großen Querschnitten kann der Abstand zwischen den beiden Längsträgern des Tragrahmens 3 zwischen dem Transport- und dem Wartungszustand variiert werden. Durch Erhöhung dieses Abstandes wird gewährleistet, dass auch Rotorblätter 11 mit einer Profilbreite von mehr als 2,55 m befahren werden können.
Die Wartungskammer 2 besitzt einen festen Strukturrahmen 14 mit einer Maximalbreite von 2,55 m, um gesetzlichen Vorschriften zum vereinfachten Transport auf der Straße zu genügen. Die Seitenelemente 16 der Wartungskammer 2, auch als Balkonelemente bezeichnet, sind ausfahrbar und vergrößern in ausgefahrenem Zustand das Kammervolumen.

Das Verfahren zum Befahren von Rotorblättern 11 zu Inspektions- und Wartungszwecken mit einer Rotorblattbefahranlage 1 der beschriebenen Art wird nachfolgend beschrieben.
Die Wartungskammer 2 wird im geschlossenen Transportzustand auf einem Anhänger zur Windenergieanlage gefahren. Am Boden werden die Seitenbalkons 16 ausgezogen und fixiert. Es folgt das Aufklappen der nicht dargestellten Geländer der Dachebene. Anschließend sind keine weiteren Montagearbeiten der Wartungskammer 2 notwendig.
Nach einer besonderen Ausführung der Wartungskammer 2 werden die Balkons 16 nicht einmalig fixiert, sondern während des Servicebetriebs kontinuierlich verfahren.
Die Wartungskammer 2 fährt mit voll geschlossenem Blendensystem und somit mit einem vollständig geschlossenen Boden zur Rotorblattspitze, wobei ein kontinuierlicher Neigungsausgleich manuell oder automatisch erfolgt. Vor der Rotorblattspitze erfolgt ein vollständiges Öffnen der verfahrbaren Blendenelemente 13.
Es folgt ein manuelles oder automatisches Einfädeln der Rotorblattspitze in die Deckenöffnung, gegebenenfalls unterstützt durch die Insassen der Wartungskammer 2.
Weiterhin erfolgt ein manuelles oder automatisches Drehen der Kammer, so dass die Kammerseiten parallel zu den Rotorblattseiten ausgerichtet sind. Es folgt das Arretieren der Wartungskammer 2 am eingefädelten Rotorblatt 11 durch Zufahren der Blendenelemente 13, bis die Abstützelemente an den Blendeninnenseiten Kontakt zum Rotorblatt 11 haben.
Das Zufahren der verfahrbaren Blendenelemente 13 erfolgt mit Kraft- oder Wegbegrenzung, so dass keine Beschädigungen am Rotorblatt 11 verursacht werden.
Zum Verfahren der Wartungskammer 2 entlang des Rotorblattes 11 werden die beweglichen Blendenelemente 13 ganz oder teilweise geöffnet beziehungsweise über eine Regel- und Steuereinrichtung verfahren.

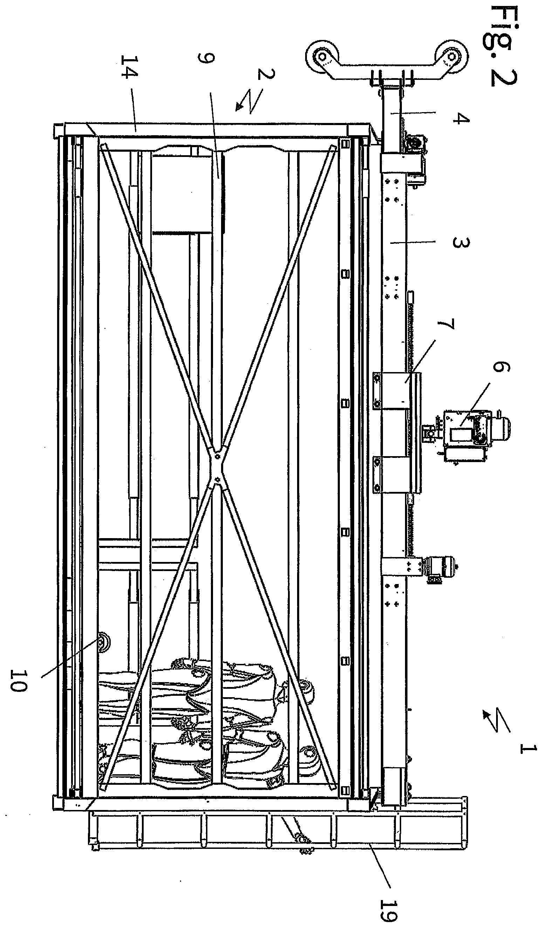

Figur 2 zeigt die Rotorblattbefahranlage 1 gemäß Figur 1 in der Seitenansicht. Der Dachzugang 19 ist in einer hinteren Ecke der Wartungskammer 2 angeordnet. Das Außengeländer 9 begrenzt die Wartungskammer 2 für die in der Kammer befindlichen Personen auch dann sicher, wenn Verkleidungen der Seitenflächen nicht montiert sind. Der feste Strukturrahmen 14 bildet den konstruktiven Kern der Wartungskammer, an welchem die Geländer und Verkleidungselemente fixiert sind oder im Bedarfsfall fixiert werden können. Ein Längsträger des Tragrahmens 3 nimmt den Längsträger des Abdruckrahmens 4 teleskopartig auf und letzterer wird im Tragrahmen 3 linear geführt. Das Neigungsausgleichsystem 7 besteht in der Führung und Positionierung der Seildurchlaufwinden 6 entlang des Längsträgers des Tragrahmens 3, wobei das Neigungsausgleichsystem 7 weiterhin Mittel zum Antrieb und zur Steuerung der Positionierung aufweist.

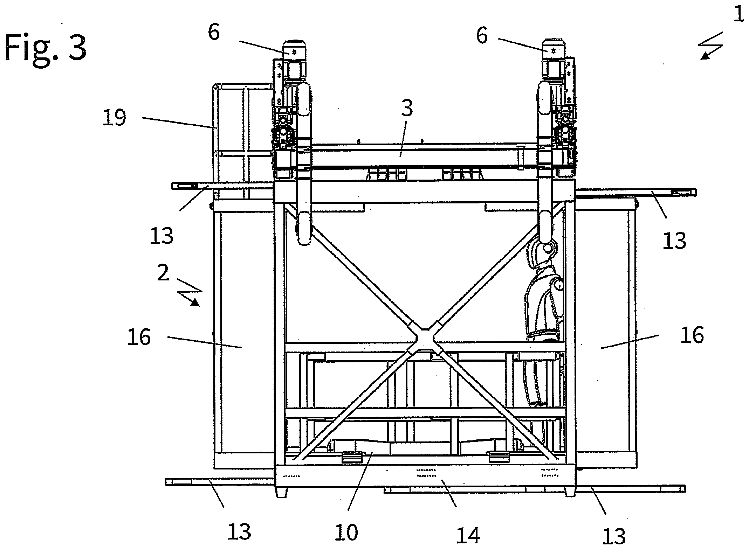

In Figur 3 ist die Rotorblattbefahranlage 1 der Figuren 1 und 2 in der Frontansicht in radialer Richtung vom Turm aus dargestellt. Die Seitenelemente 16 befinden sich in ausgefahrener Stellung und die Wartungskammer 2 besitzt in diesem Zustand ein vergrößertes Kammervolumen, was die Zugänglichkeit und die Bewegungsfreiheit für die Servicetechniker verbessert. Auch die verfahrbaren Blendenelemente 13 in der Kammerdecke und im Kammerboden befinden sich in ausgefahrener Stellung. Weiterhin sind die Querverstrebungen des Strukturrahmens 14 und des Tragrahmens 3 in der Frontansicht dargestellt und die quer zur Wartungskammer 2 im Bodenbereich angeordnete Zustellwalze 10 ist zeichnerisch angedeutet. Entlang der beiden Längsstreben des Tragrahmens 3 sind die beiden Seildurchlaufwinden 6 verfahrbar angeordnet und der Dachzugang 19 ist mit einem Seitenelement 16 ausgefahren. Die ausgefahrenen Seitenelemente 16 bilden balkonartige Erweiterungen der Wartungskammer 2 und werden deshalb auch als Balkone bezeichnet.

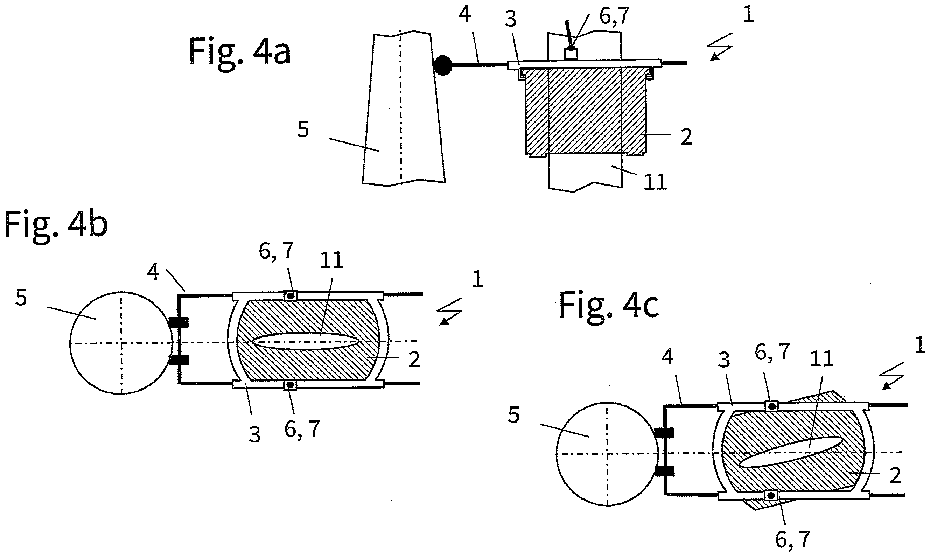

In den Figuren 4a, b und c ist die Rotorblattbefahranlage 1 stark schematisiert dargestellt.
In Figur 4a ist die Rotorblattbefahranlage 1 in der Seitenansicht gezeigt. Die Wartungskammer 2 ist am Tragrahmen 3 hängend und in der Horizontalen drehbar angeordnet und der Abdruckrahmen 4 ist aus dem Tragrahmen 3 ausgefahren und stützt sich am Turm 5 der Windkraftanlage ab. Das Rotorblatt 11 durchdringt die Wartungskammer 2 vertikal. Gehalten wird die Rotorblattbefahranlage 1 von dem angedeutet nach oben abgehenden Seil, an welchem die Seildurchlaufwinde 6 mit dem Neigungsausgleichsystem 7 eingreift.
Die Figuren 4b und 4c zeigen die Rotorblattbefahranlage 1 in der Draufsicht. Der Turm 5 der Windkraftanlage ist im Querschnitt als Kreis dargestellt, an welchen sich der Abdruckrahmen 4 abdrückt. Der Abdruckrahmen 4 wird aufgenommen vom Tragrahmen 3, an welchem die Wartungskammer hängt. Der Abdruckrahmen 4 wird in einer Linearführung im Tragrahmen 3 geführt und steht in jedem Befahrzustand in einer Flucht mit dem Turm 5 der Windkraftanlage. Die Seildurchlaufwinden 6 auf beiden Längsstreben des Tragrahmens 3 nehmen das aus der Blickrichtung von oben kommende Seil auf und sind über das Neigungsausgleichsystem 7 entlang des Tragrahmens 3 verfahrbar. Das Rotorblatt 11 ist im Querschnitt dargestellt.
In Figur 4c ist die Wartungskammer verdreht dargestellt und folgt damit dem Twist des Rotorblattes 11 in vertikaler Richtung. Die Drehachse für die Wartungskammer 2 liegt dabei in der Achse des Twistes des Rotorblattes 11. Die Anpassung der Lage der Wartungskammer 2 an den Twist des Rotorblattes 11 erfolgt über das Verdrehen der Wartungskammer 2 relativ zum festen Tragrahmen 3.

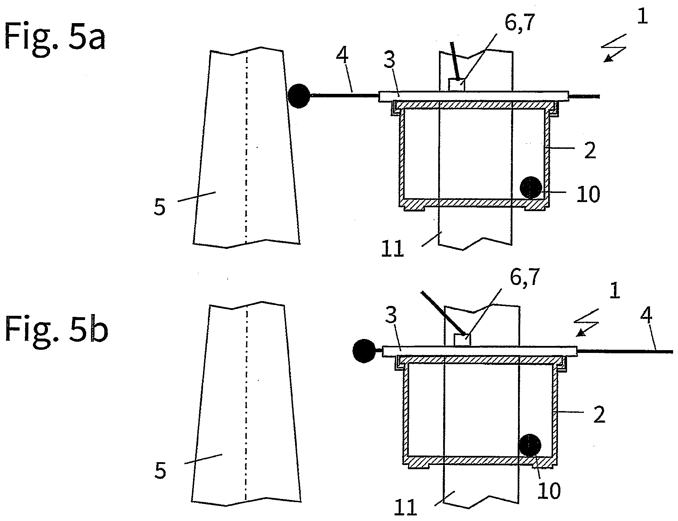

Die Figuren 5a und 5b zeigen Rotorblattbefahranlagen 1 mit aufgenommenem Rotorblatt 11 in unterschiedlichen Positionen der Wartungskammer 2 in Bezug auf das Rotorblatt 11.
In Figur 5a ist die Rotorblattbefahranlage 1 über den verstellbaren Abdruckrahmen 4 am Turm 5 der Windkraftanlage über Rollen geführt. Der Neigungsausgleich erfolgt über verschiebbare Seildurchlaufwinden 6 auf einem Neigungsausgleichsystem 7. In der dargestellten Position befindet sich das Seil in nur geringer Schrägstellung, die Rotorblattbefahranlage 1 befindet sich im unteren bis mittleren Bereich des vertikal justierten Rotorblattes 11 der Windenergieanlage. Die Schrägseilstellung erhöht sich, je höher die Rotorblattbefahranlage 1 angehoben wird. Die Abstützung der Wartungskammer 2 über den Tragrahmen 3 und den Abdruckrahmen 4 erfolgt bis zu einer Annäherung auf cirka 10 m an die Blattwurzel beziehungweise an die Rotornabe.
In Figur 5b ist eine Position der Rotorblattbefahranlage 1 mit hoher Schrägseilstellung gezeigt. Bei derartigen Schrägseilstellungen wird die Rotorblattbefahranlage 1 instabil und kann nicht mehr sicher über den verstellbaren Abdruckrahmen 4 am Turm 5 der Windenergieanlage über Rollen des Abdruckrahmens 4 geführt werden. In diesem Bereich wird eine Zustellwalze 10 automatisiert gesteuert in Eingriff gebracht, um den vertikalen Stützabstand zu vergrößern und somit die Schrägseilstellung zu verringern. Auf diese weise wird das Befahren des Rotorblattes 11 mit der Rotorblattbefahranlage 1 bis zur Blattwurzel des Rotorblattes 11 ermöglicht. Der Abdruckrahmen 4 wird dabei außer Eingriff gebracht und die Rotorblattbefahranlage 1 wird komplett am Rotorblatt 11 geführt. Der Neigungsausgleich erfolgt über verschiebbare Seildurchlaufwinden 6 auf einem Neigungsausgleichsystem 7.

In Figur 6a und 6b ist die Abdichtung des Blendensystems zum Rotorblatt 11 auszugsweise dargestellt. Das feste Boden- oder Deckenelement 15 bildet die obere Begrenzung des Blendensystems und ist begehbar ausgeführt. Der geringe Spalt zwischen den verfahrbaren Blendenelementen 13 und Rotorblatt 11 ermöglicht die Integration eines Dichtsystems 17, 18 zur Wärmeisolierung und zum Schutz vor Wind und vor eindringendem Regenwasser beziehungsweise Schnee.
In Figur 6a sind als abdichtende Elemente am Blendenelement 13 Kunststoffbürsten als Bürstendichtung 17 angeordnet, deren Borsten horizontal entlang der inneren Kontur der beweglichen Blendenelemente 13 orientiert sind.
Alternativ wird die Abdichtung gemäß Figur 6b über aufblasbare Dichtelemente 18 oder durch eine Kombination aus Bürstendichtung 17 und aufblasbaren Dichtelementen 18 realisiert
Zur Aufnahme seitlicher Lasten, etwa bei Seitenwind, sind entlang der Kontur der beweglichen Blendenelemente 13 nicht dargestellte radial orientierte Abstützelemente, wie zum Beispiel Rollen oder Gleitelemente, installiert.

In Figur 7a und 7b sind das feste Bodenelement 15 beziehungsweise das feste Deckenelement 15 der Blendensysteme des Kammerbodens beziehungsweise der Kammerdecke einer Wartungskammer 2 dargestellt. Die verfahrbaren Blendenelemente 13 sind zueinander translatorisch verschiebbar, um den Spalt zum Rotorblatt hin zu minimieren. Geschlossen wird der verbleibende Spalt durch das vorangehend beschriebene Dichtungssystem. Die übereinander angeordneten Elemente des Blendensystems aus festem Bodenelement/Deckenelement 15 und zwei verfahrbaren Blendenelementen 13 sind in den Abbildungen durch die Darstellung der seitlichen Flächen erkennbar.
Die Figur 7a zeigt das Blendensystem mit dem festen Bodenelement/festen Deckenelement 15 mit vollständig geschlossenen verfahrbaren Blendenelementen 13 und damit einer vollständig geschlossenen Boden- und Deckenöffnung 12 perspektivisch in der Draufsicht. Dieser Zustand wird bevorzugt beim Heranfahren an und beim Herablassen von der Rotorblattspitze sowie im Transportzustand eingenommen.
In Figur 7b ist das Blendensystem in geöffneter Stellung dargestellt, wobei die Boden-/Deckenöffnung 12 für das Rotorblatt 11 als Kontur erkennbar ist. Die Blendenelemente 13 sind dabei vollständig ausgefahren und die Wartungskammer 2 steht somit zur Aufnahme des Rotorblattes 11 bereit.

### Bezugszeichenliste

- 1: Rotorblattbefahranlage
- 2: Wartungskammer
- 3: Tragrahmen
- 4: Abdruckrahmen
- 5: Turm
- 6: Seildurchlaufwinde
- 7: Neigungsausgleichssystem
- 8: Innengeländer
- 9: Außengeländer
- 10: Zustellwalze
- 11: Rotorblatt
- 12: Boden-, Deckenöffnung
- 13: verfahrbares Blendenelement
- 14: Fester Strukturrahmen
- 15: festes Deckenelement/festes Bodenelement
- 16: Seitenelement, Balkon
- 17: Bürstendichtung
- 18: aufblasbares Dichtelement
- 19: Dachzugang

## Patentansprüche

1. Rotorblattbefahranlage (1), aufweisend eine von einem Rotorblatt (11) vertikal durchdringbare Wartungskammer (2), wobei im Kammerboden und in der Kammerdecke der Wartungskammer (2) eine vom Rotorblatt durchdringbare Boden-, Deckenöffnung (12) angeordnet ist, wobei die Wartungskammer (2) an einem Tragrahmen (3) angeordnet ist, wobei der Tragrahmen (3) mit einem relativ zum Tragrahmen (3) bewegbaren Abdruckrahmen (4) in Verbindung steht und wobei der Abdruckrahmen (4) an einem Turm (5) einer Windkraftanlage abstützbar ist und wobei der Kammerboden und die Kammerdecke der Wartungskammer (2) jeweils als Blendensystem zur Minimierung eines Spaltes zwischen der Boden-, Deckenöffnung (12) und dem Rotorblatt (11) ausgebildet sind, wobei die Wartungskammer (2) gegenüber dem Tragrahmen (3) in der horizontalen Ebene drehbar am Tragrahmen (3) gelagert und an den Twist des Rotorblattes (11) anpassbar ausgebildet ist und wobei die Drehachse für die Wartungskammer (2) in der Achse des Twistes des Rotorblattes (11) liegt.

2. Rotorblattbefahranlage (1) nach Anspruch 1, **dadurch gekennzeichnet, dass** der Abdruckrahmen (4) zum Abstützen der Rotorblattbefahranlage (1) am Turm (5) in horizontaler Richtung verschiebbar gegenüber dem Tragrahmen (3) ausgebildet und teleskopartig geführt ist.

3. Rotorblattbefahranlage (1) nach Anspruch 1 oder 2, **dadurch gekennzeichnet, dass** die Wartungskammer (2) hängend am Tragrahmen (3) angeordnet ist.

4. Rotorblattbefahranlage (1) nach einem der Ansprüche 1 bis 3, **dadurch gekennzeichnet, dass** die Wartungskammer (2) aus einem Strukturrahmen (14) und Verkleidungselementen für die Seitenflächen der Wartungskammer (2) zur Bildung eines nach außen weitgehend abgeschlossenen Arbeitsraumes ausgebildet ist.

5. Rotorblattbefahranlage (1) nach einem der Ansprüche 1 bis 4, **dadurch gekennzeichnet, dass** das Volumen der Wartungskammer (2) durch mindestens ein teleskopartig bewegbares Seitenelement (16) vergrößerbar ausgebildet ist.

6. Rotorblattbefahranlage (1) nach Anspruch 5, **dadurch gekennzeichnet, dass** zwei Seitenelemente (16) vorgesehen sind, die relativ zur Wartungskammer (2) und orthogonal zu den Rotorblattseiten verschiebbar und gegenüber der Wartungskammer (2) arretierbar ausgebildet sind.

7. Rotorblattbefahranlage (1) nach einem der Ansprüche 1 bis 6, **dadurch gekennzeichnet, dass** das Blendensystem aus einem festen Deckenelement (15) oder einem festen Bodenelement (15) und aus ein-, zwei- oder mehreren verfahrbaren Blendenelementen (13) ausgeführt ist.

8. Rotorblattbefahranlage (1) nach Anspruch 7, **dadurch gekennzeichnet, dass** die Blendenelemente (13) translatorisch oder rotatorisch bewegbar oder verschwenkbar ausgebildet sind.

9. Rotorblattbefahranlage (1) nach einem der Ansprüche 7 oder 8, **dadurch gekennzeichnet, dass** das Blendensystem als Ringblende ausgebildet ist.

10. Rotorblattbefahranlage (1) nach einem der Ansprüche 1 bis 9, **dadurch gekennzeichnet, dass** das Blendensystem in der horizontalen Ebene drehbar ausgebildet ist.

11. Rotorblattbefahranlage (1) nach einem der Ansprüche 1 bis 10, **dadurch gekennzeichnet, dass** die Blendenelemente (13) des Blendensystems zur Rotorblattaußenkontur hin eine Dichtung (17, 18) aufweisen.

12. Rotorblattbefahranlage (1) nach einem der Ansprüche 1 bis 11, **dadurch gekennzeichnet, dass** ein Neigungsausgleichsystem (7) mit Seildurchlaufwinden (6) ausgebildet ist, welches die Rotorblattbefahranlage (1) in vertikaler Richtung antreibt, wobei die Seildurchlaufwinden (6) horizontal verschiebbar gelagert sind, wodurch die Neigung der Rotorblattbefahranlage (1) justierbar ist.

13. Rotorblattbefahranlage (1) nach einem der Ansprüche 1 bis 12, **dadurch gekennzeichnet, dass** ein Dachzugang (19) für das Dach der Wartungskammer (2) ausgebildet ist.

14. Rotorblattbefahranlage (1) nach einem der Ansprüche 1 bis 13, **dadurch gekennzeichnet, dass** eine Zustellwalze (10) an der Wartungskammer (2) vorgesehen ist, welche die Wartungskammer (2) im Bereich der Blattwurzel zusätzlich oder allein am Rotorblatt (11) führt.

## Claims

1. Rotor-blade inspection rig (1), having a maintenance chamber (2) which can be penetrated vertically by a rotor blade (11), wherein in the chamber floor and in the chamber ceiling of the maintenance chamber (2) a floor and ceiling opening (12) capable of being penetrated by the rotor blade are arranged, wherein the maintenance chamber (2) is arranged on a carrying frame (3), wherein the carrying frame (3) is connected to a bracing frame (4) that is moveable relative to the carrying frame (3) and wherein the bracing frame (4) can be supported by a tower (5) of a wind turbine and wherein the chamber floor and the chamber ceiling of the maintenance chamber (2) are each designed as a diaphragm system for minimising a gap between the floor or ceiling opening (12) and the rotor blade (11), wherein the maintenance chamber (2) is with respect to the carrying frame (3) mounted rotatable in the horizontal plane on the carrying frame (3) and designed adaptable to the twist of the rotor blade (11) and wherein the axis of rotation for the maintenance chamber (2) lies in the axis of the twist of the rotor blade (11).

2. Rotor-blade inspection rig (1) in accordance with Claim 1, **characterised in that** the bracing frame (4) for resting the rotor-blade inspection rig (1) on the tower (5) is designed displaceable in a horizontal direction with respect to the carrying frame (3) and telescope-like in operation.

3. Rotor-blade inspection rig (1) in accordance with Claim 1 or 2, **characterised in that** the maintenance chamber (2) is arranged suspended from the carrying frame (3).

4. Rotor-blade inspection rig (1) in accordance with one of Claims 1 to 3, **characterised in that** the maintenance chamber (2) consists of a structural frame (14) and cladding elements for the sides of the maintenance chamber (2) to form a working chamber that is largely sealed off from the outside.

5. Rotor-blade inspection rig (1) in accordance with one of Claims 1 to 4, **characterised in that** the volume of the maintenance chamber (2) is designed capable of being expanded by at least one side element (16) that can be moved in the manner of a telescope.

6. Rotor-blade inspection rig (1) in accordance with Claim 5, **characterised in that** two side elements (16) are provided which are designed displaceable relative to the maintenance chamber (2) and at right angles to the sides of the rotor blade and are designed lockable with respect to the maintenance chamber (2).

7. Rotor-blade inspection rig (1) in accordance with one of Claims 1 to 6, **characterised in that** the diaphragm system is constructed from a fixed ceiling element (15) or a fixed floor element (15) and from one, two, or several positionable diaphragm elements (13).

8. Rotor-blade inspection rig (1) in accordance with Claim 7, **characterised in that** the diaphragm elements (13) are designed moveable or swivelable in a translational or rotary manner.

9. Rotor-blade inspection rig (1) in accordance with one of Claims 7 or 8, **characterised in that** the diaphragm system is designed as a circular orifice.

10. Rotor-blade inspection rig (1) in accordance with one of Claims 1 to 9, **characterised in that** the diaphragm system is designed rotatable in the horizontal plane.

11. Rotor-blade inspection rig (1) in accordance with one of Claims 1 to 10, **characterised in that** the diaphragm elements (13) of the diaphragm system have a seal (17, 18) in the direction of the external contour of the rotor blade.

12. Rotor-blade inspection rig (1) in accordance with one of Claims 1 to 11, **characterised in that** a tilt compensation system (7) with endless winches (6) is constructed which propels the rotor-blade inspection rig (1) in a vertical direction, wherein the endless winches (6) are mounted so as to be horizontally displaceable, by means of which the tilt of the rotor-blade inspection rig (1) is adjustable.

13. Rotor-blade inspection rig (1) in accordance with one of Claims 1 to 12, **characterised in that** a roof access point (19) is designed for the roof of the maintenance chamber (2).

14. Rotor-blade inspection rig (1) in accordance with one of Claims 1 to 13, **characterised in that** a feed roller (10) is provided on the maintenance chamber (2) which additionally in the region of the blade root or on its own on the rotor blade (11) guides the maintenance chamber (2).

## Revendications

1. Installation d'entretien pour pale de rotor (1), constituée d'une chambre de maintenance (2) pénétrable verticalement par une pale de rotor (11), le sol et le plafond de la chambre de maintenance (2) étant dotés d'une ouverture (12) pénétrable par une pale de rotor, la chambre de maintenance (2) étant installée sur un cadre de support (3), le cadre de support (3) étant connecté à un cadre de pression (4) mobile par rapport au cadre de support (3) et le cadre de pression (4) pouvant être supporté par la tour (5) d'une éolienne et le sol et le plafond de la chambre de maintenance (2) étant constitués comme un système d'écrans permettant de réduire une fente entre l'ouverture du sol ou du plafond (12) et la pale du rotor (11), la chambre de maintenance (2) pouvant pivoter à l'horizontale par rapport au cadre de support (3) et être posée sur la vrille de la pale du rotor (11) et l'axe de rotation de la chambre de maintenance (2) s'alignant sur l'axe de la vrille de la pale du rotor (11).

2. Installation d'entretien pour pale de rotor (1) selon la revendication 1, **caractérisée en ce que** le cadre de pression (4) destiné à soutenir l'installation d'entretien pour pale de rotor (1) sur la tour (5) peut être déplacé horizontalement par rapport au cadre de support (3) et bénéficie d'une conception télescopique.

3. Installation d'entretien pour pale de rotor (1) selon la revendication 1 ou 2, **caractérisée en ce que** la chambre de maintenance (2) est accrochée au cadre de support (3).

4. Installation d'entretien pour pale de rotor (1) selon l'une des revendications 1 à 3, **caractérisée en ce que** la chambre de maintenance (2) comprend un cadre structurel (14) et des éléments d'habillage pour les surfaces latérales de la chambre de maintenance (2) de manière à constituer une chambre de travail largement fermée sur l'extérieur.

5. Installation d'entretien pour pale de rotor (1) selon l'une des revendications 1 à 4, **caractérisée en ce que** le volume de la chambre de maintenance (2) peut être augmenté à l'aide d'au moins un élément latéral (16) mobile télescopique.

6. Installation d'entretien pour pale de rotor (1) selon la revendication 5, **caractérisée en ce que** deux éléments latéraux (16) prévus peuvent être déplacés par rapport à la chambre de maintenance (2) et perpendiculairement aux faces de la pale du rotor et verrouillés contre la chambre de maintenance (2).

7. Installation d'entretien pour pale de rotor (1) selon l'une des revendications 1 à 6, **caractérisée en ce que** le système d'écrans comprend un élément de plafond fixe (15) ou un élément de sol fixe (15) et un ou plusieurs éléments écrans (13) déplaçables.

8. Installation d'entretien pour pale de rotor (1) selon la revendication 7, **caractérisée en ce que** les éléments écrans (13) sont mobiles par translation ou par rotation, ou bien encore inclinables.

9. Installation d'entretien pour pale de rotor (1) selon l'une de revendications 7 ou 8, **caractérisée en ce que** le système d'écrans se compose d'écrans circulaires.

10. Installation d'entretien pour pale de rotor (1) selon l'une des revendications 1 à 9, **caractérisée en ce que** le système d'écrans peut être pivoté à l'horizontale.

11. Installation d'entretien pour pale de rotor (1) selon l'une des revendications 1 à 10, **caractérisée en ce que** les éléments écrans (13) du système d'écrans sont dotés d'un joint (17, 18) sur le contour extérieur des pales de rotor.

12. Installation d'entretien pour pale de rotor (1) selon l'une des revendications 1 à 11, **caractérisée en ce qu'un** système de compensation de l'inclinaison (7) se compose de treuils à passage de câble (6) qui actionnent l'installation d'entretien pour pale de rotor (1) à la verticale, les treuils à passage de câble (6) pouvant être déplacés à l'horizontale, permettant ainsi d'ajuster l'inclinaison de l'installation d'entretien pour pale de rotor (1).

13. Installation d'entretien pour pale de rotor (1) selon l'une des revendications 1 à 12, **caractérisée en ce qu'un** accès au toit (19) de la chambre de maintenance (2) est prévu.

14. Installation d'entretien pour pale de rotor (1) selon l'une des revendications 1 à 13, **caractérisée en ce qu'un** rouleau de réglage (10) est prévu sur la chambre de maintenance (2) pour amener la chambre de maintenance (2) à la base de la pale ou simplement au niveau de la pale (11).
